# EUROPEAN PATENT APPLICATION

(11) **EP 2 042 060 A1**
(43) Date of publication of application: **01.04.2009**
(21) Application number: 07425587.8
(22) Date of filing: 25.09.2007
(51) Int. Cl.: A47J 27/04, A47J 43/07

(54) **An electrical domestic appliance for food processing, with a steam cooking group**

(71) Applicant: Proprieta' Industriali S.r.l., 41100 Modena (IT)
(72) Inventor: Mordini, Massimo, 41100 Modena (IT); Principi, Stefano, 60022 Castelfidardo (Ancona) (IT)
(74) Representative: Gotra, Stefano

(57) **Abstract**

An electrical domestic appliance for food processing, comprising a functional support (1) and a steam cooking group (2, 3, 4) removably associable to a coupling surface (10b) of the support (1) in an operating configuration of the appliance. The support (1) comprises a motor group (11) provided with an upper engagement (12) and a heater (19) predisposed for heating at least part of the coupling surface (10b). The steam cooking group (2, 3, 4) comprises a boiler (2), which boiler (2) internally comprises an evaporation chamber (20) for containing water, and a cooking recipient (4) arranged above the boiler (2), the cooking recipient internally comprising a cooking chamber (40). The cooking chamber (40) is in fluid communication with the evaporation chamber (20). The boiler (2) comprises a concave and continuous lower wall (21 a, 21b), inferiorly defining the evaporation chamber (20) and being at least partially contactingly associable to the coupling surface (10b) of the support (1); the lower wall (21a, 21b) being shaped such as not to interfere with the upper engagement (12) of the motor group (11).

## Description

The invention relates specifically, though not exclusively, to a kitchen appliance comprising an accessory for steam cooking of foods.

Recent years have seen a great increase in the presence of electrical kitchen appliances, i.e. small automatic appliances which can perform many operations, mainly destined for food processing. Typically these devices are able to carry out a variety of functions (mincing, mixing, chopping and dicing, and so on) by means of a variety of different interchangeable rotary utensils internally of a container recipient.

In recent years the structure of the appliance has been added-to, with means able to perform operations that traditionally were carried out on other supports. One of these integrated functions is for example heating or cooking, which considerably facilitates preparation of some dishes. In general, the tendency is to offer as broad a range of functions as possible to the user.

For example, document WO 95/029615 describes an accessory for a kitchen appliance which enables steam cooking of foodstuffs. The appliance is of the above-described type, provided with an upper container recipient internally of which a user shaft is arranged for arrangement of rotary utensils and electrical resistances arranged below the recipient to enable heating the contents of the recipient. Steam cooking is done before applying the accessory, which consists in a cooking recipient with a perforated bottom, above the container recipient which is filled with water. By activating the electrical resistances, the evaporating water generates steam which rises through the perforated bottom and enters the cooking recipient, causing the cooking of the food contained therein.

The steam cooking effected using the device and method described above is not free of drawbacks. Firstly, there is a problem connected with the cleaning of the container recipient which operates as a boiler. Some foods, in fact, such as for example fish or white meat, lose a considerably quantity of their fats during steam cooking, which melts and falls into the container recipient of the kitchen appliance. When the cooking is finished, the cleaning of the fats from the recipient is not easily done because of the presence internally thereof of the user shaft engaged to the utensil (the engagement being necessary to guarantee the sealing of the recipient). The utensil and the recipient have to be uncoupled and cleaned separately, and the special shape thereof, destined to enable mutual coupling of the elements, includes sharp edges and spaces not facilitating de-greasing.

A further drawback of the above-described steam device relates to the limited capacity of the cooking recipient used. The use of the container recipient predisposed for other food processing operations as a boiler for steam cooking leads to a size limitation for the bottom of the cooking recipient, which has to be adapted to the size of the upper opening of the container recipient to which it is coupled.

The main aim of the present invention is to provide an appliance for food processing including a steam cooking group which does not exhibit the drawbacks described in relation to the prior art.

An advantage of the appliance of the present invention relates to the extreme ease of cleaning the components thereof, even after cooking fatty foods.

A further advantage of the appliance of the present invention is that pans or recipients having large bottoms can be associated to the steam cooking device, meaning that considerable cooking volume can be offered, as well as even cooking results throughout the food.

A further advantage of the appliance of the invention is that the steam used in cooking can be recuperated and made to condense into a separate recipient to the water heating recipient; the condensated water is rich in mineral salts and can be re-used in preparation of other dishes.

Further characteristics and advantages will better emerge from the detailed description that follows, made with reference to the accompanying figures of the drawings, provided purely by way of nonlimiting example, in which:
figure 1 is a section of the appliance of the invention in the operating configuration;

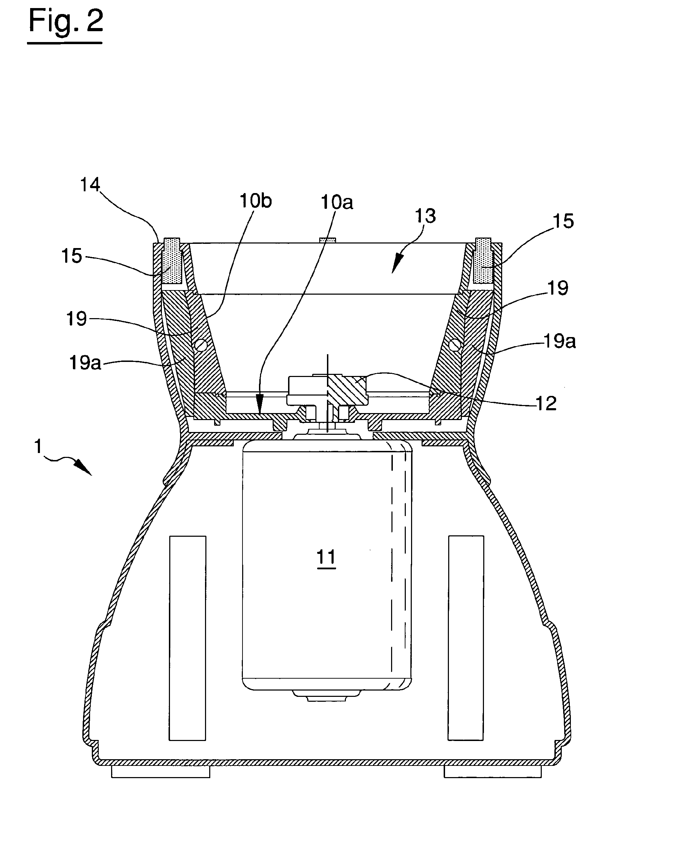

figure 2 is a section of the functional support of the appliance of the present invention;

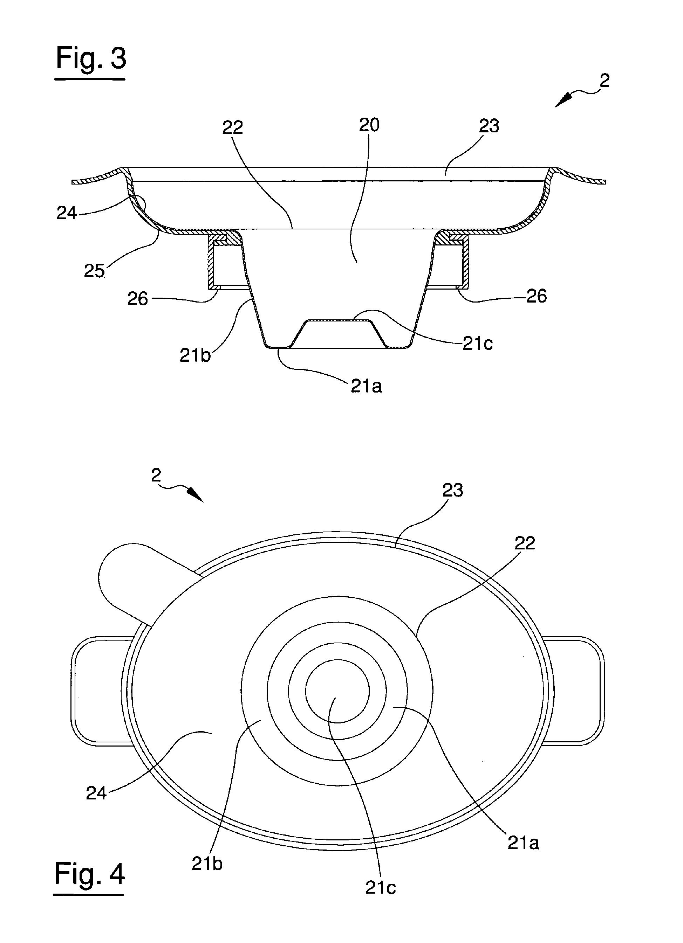

figure 3 is a section of a boiler which is part of the appliance of the present invention;
figure 4 is a view from above of the boiler illustrated in figure 3;

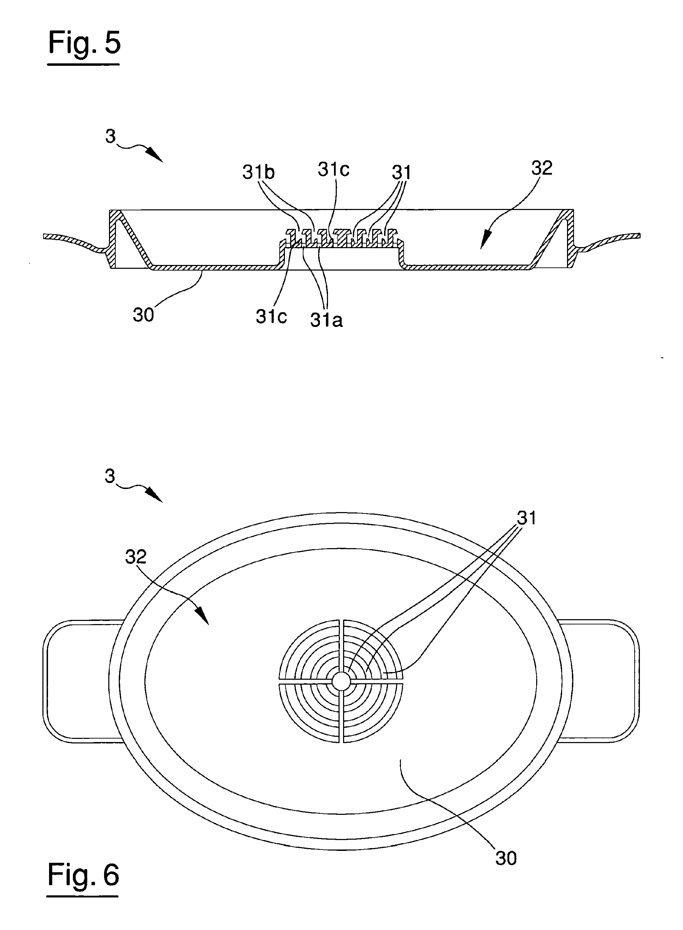

figure 5 is a section of a separator lid which is part of the appliance of the present invention;
figure 6 is a view from above of the separator lid illustrated in figure 5.

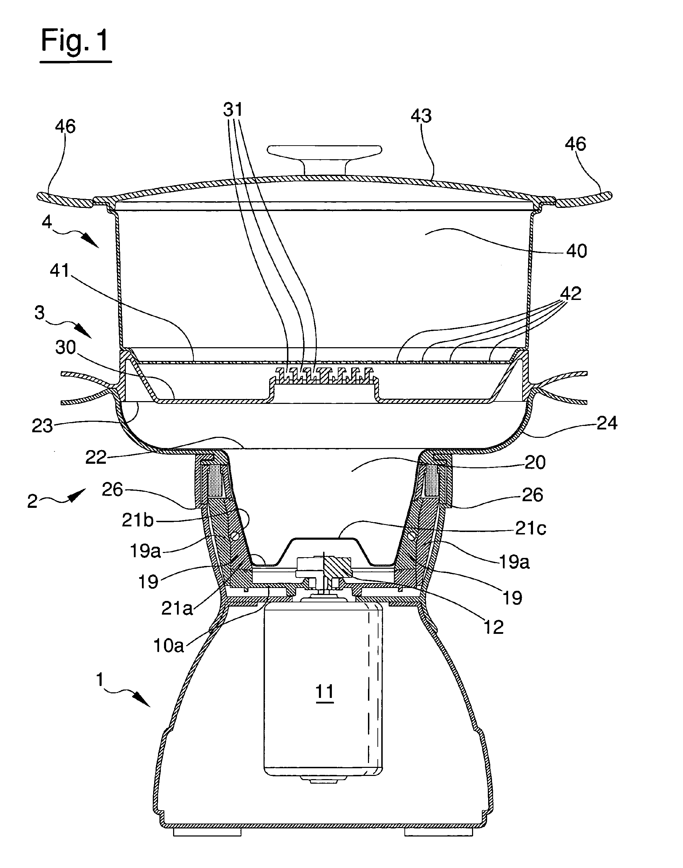

In the following description, the appliance for processing foods of the present invention is described with reference to its normal operating configuration, as illustrated in figure 1. Positional relations among the described elements in terms of relative height (for example the use of words such as upper or lower) are at all times to be interpreted with reference to this configuration.

With reference to the figures of the drawings, an appliance for food processing of the present invention comprises a functional support 1 and a steam cooking group 2, 3, 4 removably associable to a coupling surface 10b of the support 1 in a work configuration of the appliance. The support 1 comprises a motor group 11 provided with an upper engagement 12 for mechanically actuating the food processing groups associated to the engagement surface 10a, 10b and a heater 19 predisposed for heating at least part of the engagement surface 10a, 10b. In an embodiment which is not illustrated in the figures, the motor group 11 comprises a motor connected to the upper engagement 12 by means of a belt or gear transmission. An insulation 19a is advantageously associated to the heater 19, and has a heat protection function of the parts accessible to the user and a heat-loss-limiting function. The steam cooking group 2, 3, 4 comprises a boiler 2, in turn internally comprising an evaporation chamber 20 for containing the water, and a cooking recipient 4, internally comprising a cooking chamber 40. The cooking recipient is arranged above the boiler 2, the cooking chamber 40 being in fluid communication with the evaporating chamber 20 in order to allow access to the steam generated in the cooking chamber 40. The boiler 2 comprises a lower wall 21a, 21b, concave and continuous, which inferiorly defines the evaporation chamber 20 and is at least partially contactingly associable to the coupling surface 10b of the functional support 1 in the operating configuration. The lower wall 21 a, 21b is shaped such as not to interfere with the upper engagement 12 of the motor group 11 in the operating configuration.

In substance, the appliance of the invention, preferably a kitchen appliance, comprises a support 1 having known functions and characteristics. Differently to devices in the prior art, the appliance of the invention comprises a steam cooking group 2, 3, 4 with a boiler dedicated to steam cooking, rather than an accessory to be adapted to the container recipient in which the rotary utensils are located. The lower wall 21 a, 21b has been described as concave and continuous, and with this expression it was intended to define a continuous concave wall, not interrupted by a hole or a central engagement for coupling with the motor group 11. The lower wall 21a, 21b is therefore different to the bottom wall of the container recipients having other functions associable to the functional support 1, which bottom walls are provided with holes or connections to permit transmission of drive from the motor group 11 to the rotary utensils in the recipient. Apart from the already-mentioned advantages in relation to cleaning and capacity of the associated cooking recipient 4, it is obvious that the conception of a boiler 2 specifically dedicated to steam cooking enables, during the design stage, an optimisation of the accessory for the sole function it is dedicated to, for example by maximising some characteristics, such as waterproofing and heat conductivity of the lower wall 21a, 21b.

The coupling surface 10b of the support 1 is advantageously connected to a bottom surface 10a of the support itself, and defines a concave housing seating 13 for the boiler 2 in the operating position.

The coupling surface 10b is inclined with respect to the bottom surface 10a and connected to the perimeter thereof. Correspondingly the lower wall 21 a, 21 b of the boiler 2 comprises a lateral wall 21 b predisposed to couple contactingly with the coupling surface 10b in the operating configuration. The heater 19 is predisposed to heat at least part of the coupling surface 10b. The insertion of the boiler 2 into the housing seating 13 and the predisposing of a heat bridge between the coupling surface 10b and the lateral walls 21b advantageously enables using an area of heat exchange between the boiler 2 and the functional support 1 which is greater than the traditional coupling solutions in which the heat exchange occurs only at the bottom wall of the coupled recipient. The bottom surface 10a, in the operating configuration of the apparatus, does not come into contact with the lower wall 21a, 21 b of the steam cooking group 2, 3, 4. Thanks to this technical detail, the heat dilation of the lower wall, induced by the functioning of the steam compartment, causes a nearing of the lower wall 21 a, 21b to the bottom wall 10a, and not, as would happen in an opposite case, a raising of the cooking group with respect to the support 1.

The efficiency of the above-mentioned heat bridge can be optimised thanks to the use of materials provided with high levels of heat conductivity associated to the coupling surface 10b of the lateral walls 21b.

In a preferred embodiment, the bottom surface 10a is flat, and the upper engagement 12 of the motor group 11 is arranged projectingly thereon. The mechanical connection of the steam cooking group 2, 3, 4 to the motor group 11 is not included nor necessary; consequently, the lower wall 21a, 21b must be configured such as to close, in the operation configuration, above the upper engagement 12, without interfering therewith. The lower wall 21a, 21b of the boiler 2 comprises a flat bottom wall 21 a which is predisposed to be arranged distanced from and parallel to the bottom surface 10a in the operating configuration; for the above-cited reason the flat bottom wall 21 a comprises a central concavity 21c predisposed to enable a housing of the upper engagement 12, still with reference to the operating configuration.

Preferably the lower walls 21a, 21b are of limited and uniform thickness. The lateral wall 21b can be cylindrical or truncoconical, or can be constituted by various segments having cylindrical or truncoconical geometry and connected up to one another. The lateral wall 21b connects the circumferential perimeter of the bottom wall 21a to a first upper circular mouth 22. In the preferred embodiment, the lateral wall 21b is constituted by two truncoconical segments with different inclinations; the segment adjacent to the first mouth 22 is the less inclined to the vertical. In the preferred embodiment, the bottom wall 21a is constituted by a flat circular bottom, the central concavity 21c being arranged concentrically thereto and exhibiting a substantially trapezoid section. The lower walls 21 a, 21 b are preferably made of stainless steel, aluminium or another metal material having good heat conductivity characteristics.

The boiler 2 preferably comprises, apart from the lower portion constituted by the lower walls 21a, 21b, also a connecting upper portion 24. This upper portion 24 exhibits a tray-shape and connects the first mouth 22, which opens centrally on the bottom of the tray, with a upper second mouth 23, which exhibits a larger surface. Thanks to the connecting upper portion 24, the smaller size of the cooking recipient 4 is not limited to the size of the first mouth 22. In the illustrated embodiment, the second mouth 23 exhibits a substantially oval rim, although the mouth can exhibit different shapes, such as for example circular or trapezoid. The boiler 2 also comprises, below the connecting upper portion 24, a flat rest surface 25 which develops annularly along the connection perimeter between the lower portion and the connecting upper portion 24. The rest surface 25 is predisposed to couple, in the operating configuration, with an upper surface 14 of the support 1. The upper surface 14 is a flat annular surface arranged peripherally of the housing seating 13. The appliance of the invention can comprise, preferably arranged the coupling between the upper surface 14 and the rest surface 25, force transducers 15 for enabling a weighing of the steam cooking group 2, 3, 4 and the contents thereof. The appliance of the invention can also comprise, again preferably arranged at the coupling between the upper surface 14 and the rest surface 25, means for hooking 26 for enabling a fastening of the steam cooking group 2, 3, 4 to the support in the operating configuration.

In the appliance of the invention, the cooking recipient 4 comprises a bottom 41 which inferiorly defines the cooking chamber 40. The bottom 41 exhibits a plurality of perforations 42. The evaporation chamber 20 is superiorly open and in fluid communication with the cooking chamber 40 by means of the plurality of perforations 42. The bottom 41 can be directly associated to the second mouth 23, or alternatively intermediate elements can be interposed between them, as long as the intermediate elements allow the passage of steam from the evaporation chamber 20 to the cooking chamber 40. The cooking recipient 4, in the preferred embodiment of the invention, is a stainless steel pan having an oval base which includes a removable lid 43 and lateral handles 46. The perforations 42 are preferably uniformly distributed over the whole bottom 41, so as to guarantee a homogeneous presence of steam in the cooking chamber 40.

A separator wall 30 is preferably interposed between the evaporation chamber 20 and the bottom 41 of the cooking recipient 4, the separator wall 31 exhibiting at least a communication opening 31. The separator wall divides the upper first mouth 22 of the evaporation chamber 20 from the bottom 41 of the cooking recipient 4. In the preferred embodiment, the steam cooking group 2, 3, 4 comprises a separator wall 3 which is removably associable between the second mouth 23 of the boiler 2 and the bottom 41 of the cooking recipient 4; the separator wall 30 is part of the separating lid.

The separator wall 30 has the double function of entraining the steam generated in the evaporation chamber 20 and directing it towards the central zone of the bottom 41 and preventing the falling of the water produced by condensation internally of the evaporation chamber 20. To this end, the at least a communication opening 31 is arranged in a central zone of the separator wall 30. The communication openings 31 are preferably a plurality of concentric circumferential channels having an S-shaped section. The S-section, which can be substituted by other types of sections having non-linear and broken profiles, determines the non-alignment between a lower entrance 31a and an upper exit 31b of the openings, which limits to a maximum the infiltrations of condensation water internally of the evaporation chamber 20. For the same purpose, the surface aligned with the upper exit 31b is framed by an annular relief 31c which defines a collection channel for the condensation water.

The separator wall 30 superiorly exhibits a concave collector 32 of the condensation water; the at least a communication opening 31 opens at a higher point than the lower part of the concave collector 32. The at least a communication opening 31 preferably opens on surface of a cylindrical relief arranged centrally of the concave collector 32.

As the condensation water does not fall back into the condensation chamber 20, during the steam cooking the water in the chamber 20 can diminish little by little, with a risk of overheating in the boiler 2. The appliance of the invention advantageously comprises a temperature sensor predisposed for preventing overheating by deactivating the boiler 19 on reading a temperature that is above a threshold temperature. When the overheating temperature is nearly reached, optical or acoustic signalling devices can activate to inform the user that she or he can top up the liquid using a lateral opening in the boiler 2. Thanks to the presence of the lateral opening, suitably provided with a lid, the topping-up operation does not require moving the cooking recipient 4.

As emerges from the description of the device, the appliance of the present invention can be used for steam-cooking foodstuffs. A steam cooking process using the appliance comprises stages of: replacing the container recipient of the appliance with the boiler 2; filling the boiler 2 with water; associating the cooking recipient 4 to the boiler, with a possible interposing of the separator cover 3; arranging the food to be cooked internally of the cooking chamber 40 of the cooking recipient 4; closing the cooking chamber 40 with the removable lid 43; activating the heater 19; deactivating the heater 19 on completion of cooking.

During the steam cooking of the food arranged in the cooking chamber 40, the heater 19 heats at least part of the coupling surface 10a, 10b. Via the heat bridge defined by the heated surfaces in contact with the lower walls 21a, 21b of the boiler 2, the water contained therein is heated up to boiling point. The steam generated by the heated water first crosses the at least a communication opening 31, then the perforations 42 of the bottom 41 of the cooking recipient 4, penetrating into the cooking chamber 40. The foodstuffs present in the cooking chamber 40 then come into contact with the steam, which cooks them. Thereafter, the steam condenses and exits inferiorly through the perforations 42, and is collected in the concave collector 32 included for that purpose.

## Claims

1. An electrical domestic appliance for food processing, comprising: a functional support (1) and a steam cooking group (2, 3, 4) removably associable to a coupling surface (10b) of the support (1) in an operating configuration of the appliance, the support (1) comprising a motor group (11) provided with an upper engagement (12) for mechanically actuating food processing groups associable to the coupling surface (10b) and a heater (19) predisposed for heating at least part of the coupling surface (10b); the steam cooking group (2, 3, 4) comprising a boiler (2), which boiler (2) internally comprises an evaporation chamber (20) for containing water, and a cooking recipient (4), which cooking recipient internally comprises a cooking chamber (40), the cooking recipient (4) being arranged above the boiler (2), the cooking chamber (40) being in fluid communication with the evaporation chamber (20) to afford access to steam generated therein internally of the cooking chamber (40); **characterised in that** the boiler (2) comprises a concave and continuous lower wall (21a, 21b), inferiorly defining the evaporation chamber (20) and being at least partially contactingly associable to the coupling surface (10b) of the support (1) in an operating configuration, the lower wall (21a, 21b) being shaped such as not to interfere with the upper engagement (12) of the motor group (11) in the operating configuration.

2. The appliance for food processing of claim 1, **characterised in that** the coupling surface (10b) is connected to a bottom surface (10a) of the support (1) to define a concave housing seating (13) for the boiler (2) in the work configuration.

3. The appliance for food processing of claim 2, **characterised in that** the coupling surface (10b) is inclined with respect to the bottom surface (10a) and connected to the perimeter thereof; the lower wall (21 a, 21 b) of the boiler (2) comprising a lateral wall (21 b) predisposed to couple contactingly with the coupling surface (10b) in the work configuration; the heater (19) being predisposed to heat at least a part of the coupling surface (10b).

4. The appliance for food processing of claim 3, **characterised in that** the bottom surface (10a) is flat and that the upper engagement (12) of the motor group (11) is arranged projectingly on the bottom surface (10a), the lower wall (21a, 21b) of the boiler (2) comprising a flat bottom wall (21 a) predisposed to be distanced and parallel to the bottom surface (10a) in the operating configuration, the flat bottom wall comprising a central concavity (21c) predisposed to allow housing of the upper engagement (12) in the operating configuration.

5. The appliance for food processing of one of the preceding claims, **characterised in that** the cooking recipient (4) comprises a bottom (41) which inferiorly defines the cooking chamber (40), the bottom (41) exhibiting a plurality of perforations (42), the evaporation chamber (20) being superiorly open and in fluid communication with the cooking chamber (40) via the plurality of perforations (42).

6. The appliance for food processing of claim 5, **characterised in that** a separator wall (30) is interposed between the evaporation chamber (20) and the bottom (41) of the cooking recipient (4), the separator wall (30) exhibiting at least a communication opening (31).

7. The appliance for food processing of claim 6, **characterised in that** the at least a communication opening (31) is arranged in a central zone of the separator wall (30).

8. The appliance for food processing of claim 7, **characterised in that** the communication openings (31) are a plurality and are concentric circumferential channels having an S-shaped section.

9. The appliance for food processing of claims from 6 to 8, **characterised in that** the separator wall (30) superiorly exhibits a concave collector (32) of condensation water, the at least a communication opening (31) being afforded at a higher level than a lower height of the concave collector (32).

10. The appliance for food processing of one of the preceding claims, **characterised in that** it comprises a temperature sensor predisposed to prevent overheating of the boiler (2) by deactivating the heater (19) when detecting a temperature which is above a threshold temperature.
